# EUROPEAN PATENT SPECIFICATION

(11) **EP 4 134 176 B1**
(45) Date of publication and mention of the grant of the patent: **21.08.2024**
(21) Application number: 21784921.5
(22) Date of filing: 12.02.2021
(51) Int. Cl.: B08B 7/00, B01D 53/00

(54) **METHOD FOR DECOMPOSING NICOTINE**
VERFAHREN ZUR ZERSETZUNG VON NIKOTIN
PROCÉDÉ DE DÉCOMPOSITION DE LA NICOTINE

(30) Priority: 09.04.2020 JP 2020070148
(43) Date of publication of application: 15.02.2023
(73) Proprietor: Ushio Denki Kabushiki Kaisha, Tokyo 100-8150 (JP)
(72) Inventor: NAITO,Keisuke, Tokyo 100-8150 (JP)
(74) Representative: Maiwald GmbH
(86) International application number: PCT/JP2021/005245
(87) International publication number: WO 2021/205744

(56) References cited:
- DE-A1- 102007 021 796
- JP-A- 2003 344 601
- JP-A- 2006 229 198
- JP-A- 2010 528 064
- JP-A- 2011 240 302
- JP-A- 2011 240 302
- JP-A- H10 219 461
- JP-A- H11 276 563
- US-A1- 2010 074 944

## Description

### TECHNICAL FIELD

The present invention relates to a method for decomposing nicotine.

### BACKGROUND ART

In recent years, there has been a pointed-out health problem posed to a smoker or a third party who inhales air containing a chemical substance that is volatilized from a substance attached to the clothes of the smoker, wallpaper of a smoking room, or the like. Inhaling a substance harmful to the human body in such a way is called "third-hand smoke".

It is known that nicotine contained in cigarettes reacts with nitrous acid in the air and generates a nitrosamine, which is a carcinogen, (especially a tobacco-specific nitrosamine (TSNA)). In particular, nicotine gets attached to a wall surface of a smoking room or clothes of a smoker for hours and thus the reaction above is expected to occur for a long time. As a result, there is an existing risk that a human may inhale such a carcinogen.

A method that is disclosed is a conventional method for cleaning out tobacco stains infiltrated into an interior material for a building using sunlight or ultraviolet light with a wavelength from 300 nm to 450 nm (see Patent Document 1 below).

### PRIOR ART DOCUMENT

Patent Document 1: JP-A-2011-240302

### SUMMARY OF THE INVENTION

### PROBLEMS TO BE SOLVED +BY THE INVENTION

The method of Patent Document 1 above is a technique for decomposing and removing tar, generally called a "stain", that has seeped into the interior material by irradiating sunlight or ultraviolet light with a wavelength from 300 nm to 450 nm while the interior material is moistened with a hydrogen peroxide solution.

Unfortunately, nicotine attached to the interior material cannot be decomposed by the method of Patent Document 1. Thus, there remains the risk that the human body may inhale nitrosamine.

Further, when employing the method of Patent Document 1, a worker needs to perform cleaning work while projecting ultraviolet light with gloves, protective glasses (UV-blocking glasses), and a face shield being worn on the worker. Consequently, the cleaning work is on a large scale and complicated.

US 2010/074944 A1 relates to an invention concerning a transdermal nicotine patch and states that nicotine is decomposed when it is exposed to ultraviolet light, but there is no mention regarding the wavelength that should be employed as ultraviolet light.

JP H11 276563 A describes the use of ultraviolet light and a photocatalyst to decompose and deodorize unspecified malodorous substances, but again there is no mention of the wavelength range of ultraviolet light regarding the decomposition of nicotine.

DE 10 2007 021796 A1 describes the use of light and photocatalytic materials in the extremely wide wavelength range of 10-800 nm to purify the air, but there is no mention of the wavelength range of ultraviolet light that may be used regarding the decomposition of nicotine.

Given the above problems, an object of the present invention is to provide a method for decomposing nicotine in a simple way.

### MEANS FOR SOLVING THE PROBLEMS

A method for decomposing nicotine, according to the present invention, includes a step (a) of irradiating ultraviolet light with a main peak wavelength of 200 nm to 230 nm in a target room allowing smoking to decompose the nicotine.

Owing to an extensive study by the present inventor, it is observed that nicotine can be decomposed by ultraviolet light with a main peak wavelength ranging from 200 nm to 230 nm both inclusive. It should be noted that in a process of this decomposition, nitrosamine is not generated.

In the present specification, the "target room" refers to a space in general in which smoking is expected indoors. In one example, the space that is assumed is a smoking room provided for a separation of smoking and nonsmoking areas, as well as a room such as a meeting room, a hotel guest room, a room in one's house, a waiting room, and an amusement center (a game center, a karaoke booth, a mah-jongg saloon) where smoking is allowed.

According to this method, by simply placing, for example, a light source that emits the ultraviolet light in the target room allowing smoking, the nicotine inside the room is automatically decomposed. Thus, unlike the conventional method, cleaning work is not necessarily required to be performed by a worker wearing gloves, protective glasses (UV-blocking glasses), and a face shield.

In particular, if human skin is irradiated with the ultraviolet light in the wavelength range described above, the ultraviolet light is absorbed by a stratum corneum of the skin and does not advance further inside (toward a stratum basale). The corneocyte contained in the stratum corneum is dead as a cell. Therefore, there is almost no risk that, as in the case of irradiation with ultraviolet light having a wavelength of 254 nm, for example, ultraviolet light is absorbed into living cells such as the stratum spinosum, the stratum granulosum, and the dermis to destroy DNA.

Thus, even while a smoker is smoking inside the room, a process for decomposing nicotine by irradiation of the room with the ultraviolet light can be performed. As a result, nicotine is less likely to get attached to inner surfaces of the room, such as wall, floor, and ceiling surfaces, and surfaces of objects such as a desk and a television placed in the room for hours. This substantially reduces the risk of generation of the nitrosamine inside the room. In other words, the step (a) may include a step of irradiating the ultraviolet light toward an inner wall surface of the target room or a surface of an object installed in the target room.

Furthermore, even while a smoker is smoking inside the target room, the process of decomposing nicotine by irradiating ultraviolet light can be performed, so that nicotine is less likely to get attached to clothes of the smoker. This substantially reduces the risk that the smoker or a third party may inhale the nitrosamine generated by the decomposition of nicotine attached to the clothes of the smoker being out of the room.

Meanwhile, a method for decomposing nicotine in a target room only by projecting sunlight or visible light on a photocatalyst is also conceivable. However, the target room is a place designated for smoking, and sidestream smoke and exhale smoke waft inside the target room as long as someone is smoking. Thus, it is assumed that fine particles such as tar contained in such smoke build up on a surface of the photocatalyst over time, leading to a decrease in the function of nicotine decomposition in a short period.

On the other hand, the method of the present invention includes the step (a) of irradiating ultraviolet light with a main peak wavelength of 200 nm to 230 nm in the target room and thus is capable of decomposing nicotine as long as the ultraviolet light reaches a nicotine-attached area. Thus, this method provides higher efficiency of nicotine decomposition compared to the method using the photocatalyst.

However, the present invention does not preclude the use of this method in conjunction with photocatalysis, as long as the target room is irradiated with ultraviolet light with a main peak wavelength of 200 nm to 230 nm.

Ultraviolet light with a wavelength of less than 200 nm is apt to be absorbed by oxygen in the air and thus is less likely to reach a target such as a wall surface. Hence, the main peak wavelength of the ultraviolet light is longer than or equal to 200 nm.

The step (a) may include irradiating the ultraviolet light from an excimer lamp enclosed with a light-emitting gas containing Kr and Cl. In such a case, the excimer lamp emits the ultraviolet light with a main peak wavelength of around 222 nm. The "around" used herein refers to a concept including individual deviations of approximately ±2 nm.

The method for decomposing nicotine may include a step (b) of generating an air current to exhaust an atmosphere in the target room to an outside of the target room, and
the step (b) may include exhausting the atmosphere containing a nicotine decomposition product generated by the step (a) to the outside of the target room.

According to the method above, the nicotine decomposition product generated through the decomposition of the nicotine by irradiation with the ultraviolet light can be exhausted to the outside of the room (the outside of the system) by the air current.

In this case, the step (b) may include generating the air current flowing along an inner wall surface of the target room. Thus, the nicotine decomposition product generated through the decomposition of the nicotine attached to the wall surface of the target room can be efficiently exhausted to the outside of the room.

### EFFECT OF THE INVENTION

The method according to the present invention makes it possible to decompose nicotine in a simple way.

### BRIEF DESCRIPTION OF THE DRAWINGS

Fig. 1 is a schematic view illustrating a method for decomposing nicotine according to an embodiment of the present invention.
Fig. 2A is a schematic plan view illustrating a configuration of an excimer lamp as an example of a light source.
Fig. 2B is a cross-sectional view taken along line A1-A1 of Fig. 2A.
Fig. 3 is a chart illustrating a spectrum of ultraviolet light L1 emitted from an excimer lamp in which a light-emitting gas contains KrCI.
Fig. 4 is a graph illustrating a relationship between an exposure dose and a rate of decline of nicotine in response to irradiation with ultraviolet light with a wavelength of 222 nm.
Fig. 5A is a graph illustrating a measurement result of an absorption spectrum of an aqueous nicotine solution.
Fig. 5B is a graph of an expanded range of some wavelengths in Fig. 5A.
Fig. 6 is another schematic view illustrating a method for decomposing nicotine according to an embodiment of the present invention.
Fig. 7A is another schematic view illustrating a method for decomposing nicotine according to an embodiment of the present invention.
Fig. 7B is another schematic view illustrating a method for decomposing nicotine according to an embodiment of the present invention.

### MODE FOR CARRYING OUT THE INVENTION

An embodiment of a method for decomposing nicotine according to the present invention will be described regarding the drawings as appropriate.

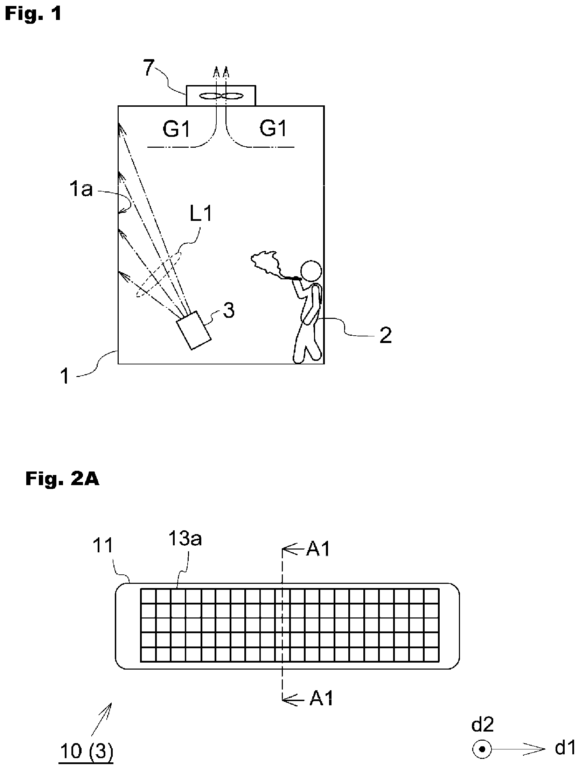

Fig. 1 is a schematic view illustrating a method for decomposing nicotine according to an implementation state of the present invention. The method for decomposing nicotine according to the present invention involves irradiating ultraviolet light L1 from a light source 3 in a target room allowing smoking to decompose the nicotine.

Fig. 1 illustrates a case example where a wall surface 1a of the target room 1 is irradiated with the ultraviolet light L1 from the light source 3. In the example of Fig. 1, the target room 1 is provided with an air outlet 7 for exhausting the room atmosphere to the outside of the room.

Fig. 1 schematically illustrates a situation in which the target room 1 is a smoking room and a smoker 2 is smoking.

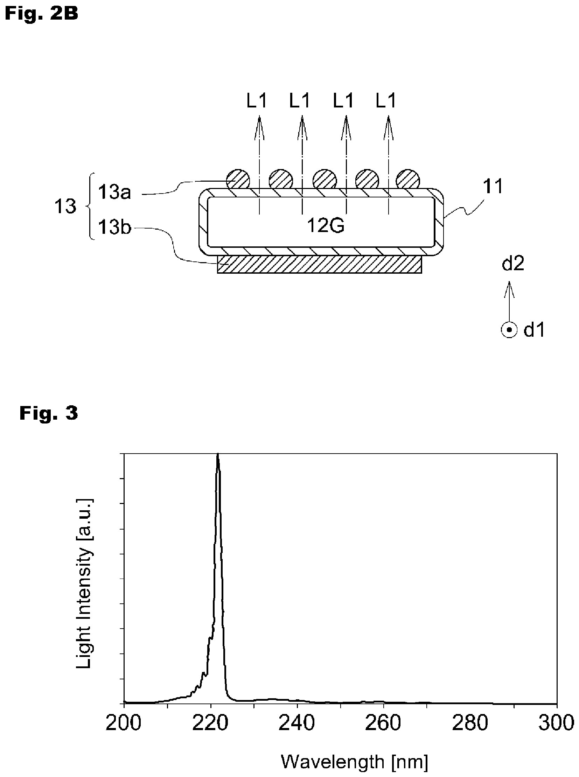

In the present embodiment, the light source 3 is made up of an excimer lamp that emits the ultraviolet light L1 with a main peak wavelength of around 222 nm. Fig. 2A is a schematic plan view illustrating a configuration of the excimer lamp, and Fig. 2B is a cross-sectional view taken along line A1-A1 of Fig. 2A.

An excimer lamp 10 includes a light-emitting tube 11 extending along a direction d1. The light-emitting tube 11 is made of a dielectric such as synthetic quartz glass, a material that transmits ultraviolet light L1. The light-emitting tube 11 is sealed inside, and the inside is enclosed with a light-emitting gas 12G that forms excimer molecules by electrical discharge.

The excimer lamp 10 includes a pair of electrodes 13 (13a, 13b) formed on a tube wall of the light-emitting tube 11. In an example of Figs. 2A and 2B, the electrode 13a disposed on a side of the excimer lamp 10 (+d2 side) from which the ultraviolet light L1 is extracted has a mesh or linear shape. The electrode 13b disposed on the opposite side has a film shape. In this case, it is preferable that the electrode 13b is made of a metallic material (such as Al or an Al alloy) that exhibits reflectivity to the ultraviolet light L1 or that a reflective film (not illustrated) is disposed of on the tube wall of the light-emitting tube 11 on the side on which the electrode 13b is formed. The reflective film may be made of Al, an Al alloy, stainless steel, silica, silica-alumina, or the like.

However, if the ultraviolet light L1 is extracted from the excimer lamp 10 in both +d2 and - d2 directions, the electrode 13b may also have a mesh or linear shape.

When a high-frequency alternating voltage of about 50 kHz to 5 MHz, for example, is applied between the pair of the electrodes 13 (13a, 13b) of the excimer lamp 10 from a lighting power source (not illustrated) via a feeder, the voltage is applied to the light-emitting gas 12G via the light-emitting tube 11. At this time, discharge plasma is generated in a discharge space in which the light-emitting gas 12G is enclosed, so that atoms of the light-emitting gas 12G are excited to be brought into an excimer state, and excimer light emission occurs when the atoms shift to the ground state.

The light-emitting gas 12G is made of a material that emits the ultraviolet light L1 with a main peak wavelength of 200 nm to 230 nm both inclusive at the time of excimer emission. In one example, the light-emitting gas 12G contains KrCI or KrBr.

For example, when the light-emitting gas 12G contains KrCl, the excimer lamp 10 emits the ultraviolet light L1 with a main peak wavelength of around 222 nm. When the light-emitting gas 12G contains KrBr, the excimer lamp 10 emits the ultraviolet light L1 with a main peak wavelength of around 207 nm. Fig. 3 is a chart illustrating a spectrum of the ultraviolet light L1 emitted from the excimer lamp 10 in which the light-emitting gas 12G contains KrCl.

A verification was conducted to confirm that nicotine can be decomposed through irradiation of the nicotine with the ultraviolet light L1 that has a main peak wavelength of 222 nm as shown with the spectrum in Fig. 3.

Specifically, nicotine (FUJIFILM Wako Pure Chemical Corporation-made, Wako 1st Grade) was diluted with isopropyl alcohol (hereinafter abbreviated as "IPA"). Two dilution ratios, 1/10⁵ and 1/10⁶, were used. A 10µL dilute solution prepared in this way was applied to a polycarbonate (PC) plate 1 cm square to make a specimen.

As a preliminary experiment, an area 10cm square on a wall surface of a smoking room was wiped with filament nonwoven fabric (e.g., Asahi Kasei Corporation-made BEMCOT (registered trademark)) containing IPA to collect a sample, and the collected sample was analyzed using a gas chromatograph-mass spectrometer (GC-MS, JEOL Ltd.-made, JMS-Q1500GC). As a result, nicotine concentration was in a range from 1/10⁵ to 1/10⁶ both inclusive when the concentration was converted to a corresponding dilution ratio. Since it was probable, based on the results of the preliminary experiment, that nicotine at a concentration in the range from 1/10⁵ to 1/10⁶ both inclusive was attached to the wall surface of the smoking room, specimens containing nicotine diluted at the dilution ratios described above were made.

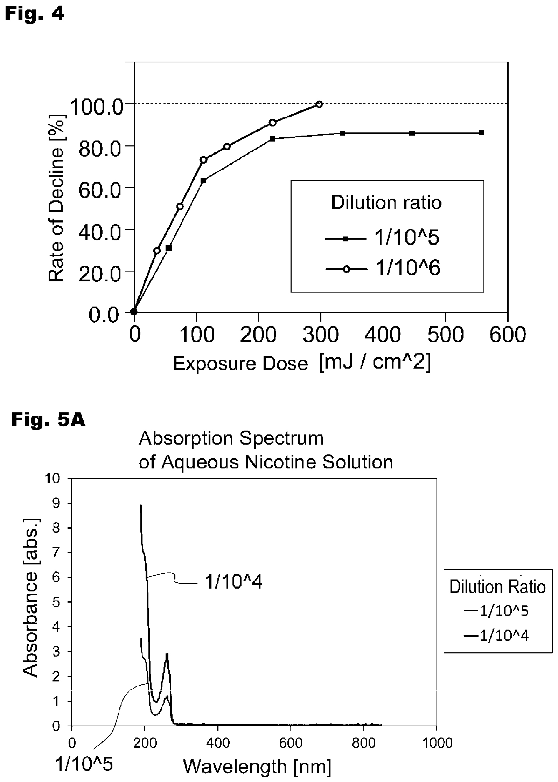

A surface of each of the made specimens was irradiated with the ultraviolet light L1 with a main peak wavelength of 222 nm at an irradiance of 1 mW/cm² from the excimer lamp 10. After that, each specimen was inserted in a headspace screw-thread vial for GC-MS (GL Sciences Inc.-made: 1030-51096) and was heated at 60°C for 60 minutes. Then, the specimen was absorbed by a solid-phase microextraction (SPME) fiber (PDMS/DVB df 65µm: Sigma-Aldrich-made) and was analyzed using a GC-MS (JEOL Ltd.-made, JMS-Q1500GC). The result of this analysis is shown in Fig. 4.

Fig. 4 is a graph with the horizontal axis representing an exposure dose [mJ/cm²] of the ultraviolet light L1 and the vertical axis representing a rate of decline of nicotine from an initial stage. In this verification, the specimens were irradiated with the ultraviolet light L1 at an irradiance of 1 mW/cm², as described above. Thus, the exposure dose [mJ/cm²] of the horizontal axis can be read as irradiation time [seconds].

According to the result in Fig. 4, it is observed that 75% or more of the nicotine can be decomposed by irradiating the specimens with the ultraviolet light L1 at an exposure dose of 200 mJ/cm². When the nicotine dilution ratio is 1/10⁶, all the nicotine is decomposed by irradiating the specimen with the ultraviolet light L1 at an exposure dose of 300 mJ/cm².

As described above in the "MEANS FOR SOLVING THE PROBLEMS" section, if human skin is irradiated with the ultraviolet light L1 with a main peak wavelength of 200 nm to 230 nm both inclusive, the ultraviolet light is absorbed by the stratum corneum of the skin and does not advance further inside (toward the stratum basale). Thus, even in a period during which a human (the smoker 2 in Fig. 1) is present in the target room 1, the inner wall surface 1a of the target room 1 can be irradiated with the ultraviolet light L1 from the light source 3.

In particular, when the target room 1 is a smoking room, the smoker 2 is expected to leave the room once the smoker finishes smoking. As a result, any identical person is less likely to stay in the room for a long time. Hence, if the light source 3 is placed in the target room 1 and the wall surface is irradiated with the ultraviolet light L1 in a period during which a smoker 2 is present, the risk of causing the smoker 2 to be exposed to the light to such an extent that the body of the smoker is influenced is extremely low.

However, there may exist a smoker 2 unwilling to be in the target room 1 in which the ultraviolet light L1 is radiated despite virtually no influence on the human body. Thus, when the target room 1 is a smoking room, a control unit (not illustrated) included in the light source 3 may take control to stop irradiation with the ultraviolet light L1 in response to the detection of the presence of the smoker 2 in the target room 1. More specifically, the control unit may take control to stop the flow of electricity to the pair of the electrodes 13 (13a, 13b). In one example, a method of detecting the presence of the smoker 2 in the target room 1 can be implemented with a device such as a motion sensor disposed of in the target room 1 or a sensor for detecting entry of a human into the target room 1 (e.g., automatic door opening and closing).

When the light source 3 includes the control unit, the control unit may take control such that the light source 3 alternates lighting on and off at predetermined time intervals. As observed from the result in Fig. 4, an amount of the decomposed nicotine increases with a rise in the exposure dose to the nicotine. Thus, even if the ultraviolet light L1 is intermittently radiated at a plurality of times, the nicotine remaining in the target room 1 can be decomposed in a similar way.

In the example of Fig. 1, an atmosphere G1 in the target room 1 is exhausted through the air outlet 7 provided for the target room 1. Thus, the nicotine decomposition product generated through the decomposition of the nicotine by irradiation with the ultraviolet light L1 is exhausted out of the target room 1 by riding an air current of the atmosphere G1. The products generated through the decomposition by irradiation of the nicotine with the ultraviolet light L1 include nicotinamide and nornicotine. However, any nitrosamine is not generated. This substantially reduces the amount of nitrosamine, a carcinogen, generated over time due to the nicotine remaining in the target room 1.

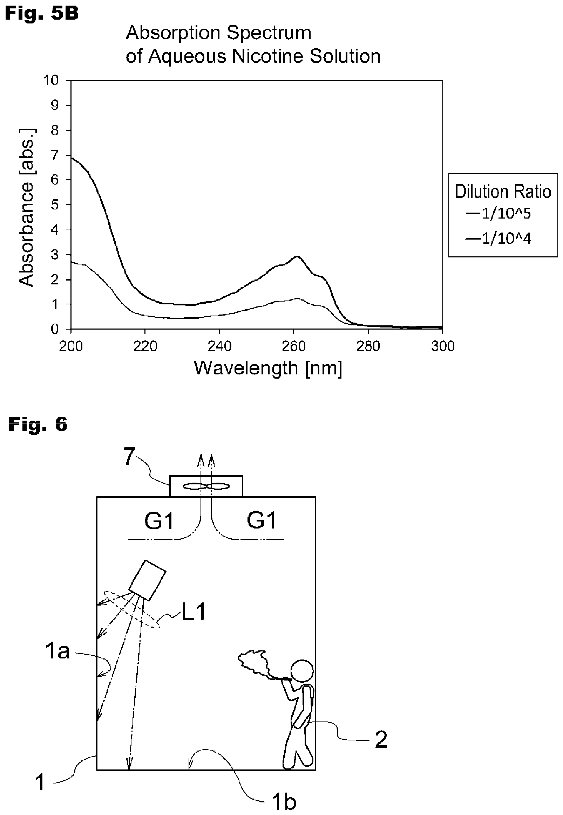

Figs. 5A and 5B are graphs each illustrating an absorption spectrum of an aqueous nicotine solution. After solutions in which nicotine was diluted at dilution ratios, 1/10⁴ and 1/10⁵ were made in the similar way described above, the absorbance of the solutions was measured using an absorptiometer (Thermo Fisher Scientific Inc.-made, NanoDrop One). The graph of Fig. 5A shows measurement results. It is observed that even with a further increase in nicotine concentration by adjustment of the dilution ratio, absorbance at a wavelength of 300 nm or more does not virtually rise. This result illustrates that the light absorbency of nicotine is low. Fig. 5B is a graph showing an expanded range of some wavelengths in Fig. 5A.

Given the results of Figs. 5A and 5B, it is observed that the light absorptive power of nicotine is extremely low on a side of long wavelengths, i.e., wavelengths longer than and equal to 300 nm. While the spectrum has an absorptive peak at a wavelength of around 260 nm, absorption of light by the nicotine is also observed in a wavelength range from 200 nm to 230 nm both inclusive. According to the result in Fig. 4, it is observed that the nicotine can be decomposed by radiation of the ultraviolet light L1 with a main peak wavelength of around 222 nm. Thus, given the results of Figs. 4, 5A, and 5B, it is found that the nicotine can be decomposed similarly by radiation of the ultraviolet light L1 not only with a wavelength of around 222 nm but also with a main peak wavelength ranging from 200 nm to 230 nm.

From the viewpoint of efficient nicotine decomposition, it is expected that radiation of ultraviolet light with a wavelength of around 260 nm provides a higher decomposition rate compared to radiation of the ultraviolet light L1 with a main peak wavelength ranging from 200 nm to 230 nm. A light source that emits ultraviolet light in the longer-wavelength range is a low-pressure mercury lamp, for example.

However, there is a risk that ultraviolet light with a wavelength of around 260 nm may harm the human body, such as DNA damage if the human body is irradiated with such ultraviolet light. Hence, the use of such a light source is required to be strictly controlled such that the light source turns on only when the nonexistence of any human (e.g., the smoker 2) in the target room 1 is confirmed. A conceivable way of minimizing the risk is, for example, an embodiment where the nonexistence of any human in the target room 1 can be confirmed with a device such as a motion sensor placed in the target room 1, and control is taken to allow the light source to turn on only in a limited period during which any human is thought to never enter the target room 1. However, this control may result in a short time for which the light source is allowed to turn on in the target room 1 and thus the efficiency of nicotine decomposition does not improve much. There is also a risk that a profound influence may be exerted on the human body in case the sensor malfunctions.

In contrast to this, the ultraviolet light L1 with a main peak wavelength ranging from 200 nm to 230 nm does not cause the anxiety above because such ultraviolet light has hardly any influence on the human body even if a human (e.g., the smoker 2) is present in the target room 1. For instance, the effect of making nicotine less likely to get attached to the wall surface 1a of the target room 1 lasts if the light source 3 is turned off while cleaning is performed inside the target room 1 and the light source 3 is turned on when cleaning finishes and is kept turned on thereafter.

As illustrated in Fig. 6, the light source 3 may be installed to emit the ultraviolet light L1 downward. In this case, nicotine attached to a floor surface 1b of the target room 1 can also be decomposed. A direction in which the ultraviolet light L1 emitted from the light source 3 travels may be variable. In one example, the light source 3 can be configured to be rotatable on one axis, two axes, or three axes such that a direction normal to a surface from which the ultraviolet light L1 is emitted, i.e., the direction in which the ultraviolet light L1 travels, is variable. In another example, the light source 3 may be placed in the target room 1 in such a manner that a position of the placed light source 3 can be freely changed.

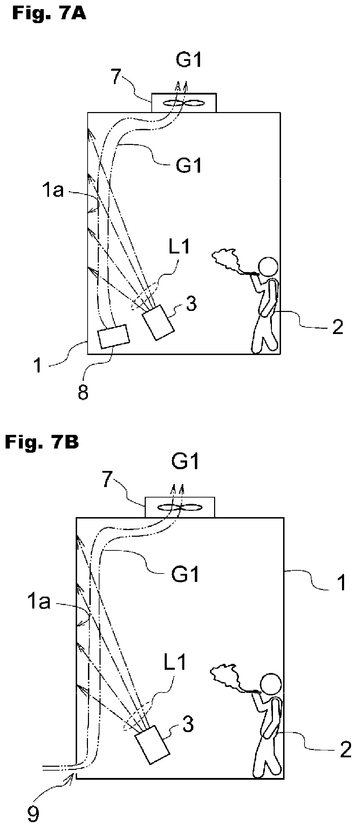

As illustrated in Fig. 7A, the target room 1 may be equipped with a fan 8 to generate an air current. As illustrated in Fig. 7B, the target room may be equipped with an air inlet 9. As a result of this, nicotine decomposition product generated through decomposition by irradiation of the nicotine attached to areas such as the wall surface 1a with the ultraviolet light L1 is readily exhausted through the air outlet 7 by riding the air current of the atmosphere G1 flowing along the wall surface 1a.

[Other embodiments] Other embodiments will be described below.

<1> In the embodiment above, a case is described in which the light source 3 is an excimer lamp. However, in the method for decomposing nicotine according to the present invention, the light source is not limited to the excimer lamp, as long as the light source emits the ultraviolet light L1 with a main peak wavelength of 200 nm to 230 nm. For instance, the light source 3 may be a solid-state light source such as a light-emitting diode (LED) or a laser diode (LD).

Even when the light source 3 is made up of an excimer lamp, a structure of the light source 3 is not limited to that illustrated in Figs. 2A and 2B. For instance, the light-emitting tube 11 may have a double-tube structure in which the light-emitting tube including an inside tube and an outside tube is sealed off at both ends in a tube axis direction and an annular tube-shaped region defined between the inside tube and the outside tube constitutes a light-emitting space. In another example, the light-emitting tube 11 may be cylindrical and may have a structure in which one electrode is inserted inside of the tube whereas another electrode is disposed on an outer wall surface of the light-emitting tube 11, and the inside of the tube constitutes a light-emitting space.

<2> In the embodiment described above, the wall surface 1a or the floor surface 1b of the target room 1 is irradiated with the ultraviolet light L1. However, a ceiling surface of the target room 1 may be irradiated with the ultraviolet light L1. If objects such as a table, a chair, or a television screen are placed in the target room 1, the surfaces of these objects may be irradiated with the ultraviolet light L1. This reduces the risk that nicotine will get attached to not just the wall surface of the target room 1 but the whole of the target room 1 for hours.

### DESCRIPTION OF REFERENCE SIGNS

- 1: Target room
- 1a: Wall surface
- 1b: Floor surface
- 2: Smoker
- 3: Light source
- 7: Air outlet
- 8: Fan
- 9: Air inlet
- 10: Excimer lamp
- 11: Light-emitting tube
- 12G: Light-emitting gas
- 13: Electrode
- 13a: Electrode
- 13b: Electrode
- 15G: Light-emitting gas
- G1: Atmosphere
- L1: Ultraviolet light

## Claims

1. A method for decomposing nicotine, the method comprising a step (a) of irradiating ultraviolet light (L1) in a target room (1) allowing smoking,
**characterized in that**
ultraviolet light (L1) with a main peak wavelength of 200 nm to 230 nm is irradiated to decompose the nicotine.

2. The method for decomposing nicotine, accordingto claim 1, wherein the step (a) includes irradiating the ultraviolet light (L1) from an excimer lamp (10) enclosed with a light-emitting gas containing Kr and Cl.

3. The method for decomposing nicotine, according to claim 1 or 2, wherein the step (a) includes a step of irradiating the ultraviolet light (L1) toward an inner wall surface (1a) of the target room (1) or a surface of an object installed in the target room.

4. The method for decomposing nicotine, according to any one of claims 1 to 3, the method further comprising a step (b) of generating an air current to exhaust an atmosphere (G1) in the target room (1) to an outside of the target room,
wherein the step (b) includes exhausting the atmosphere (G1) containing a nicotine decomposition product generated by the step (a) to the outside of the target room (1).

5. The method for decomposing nicotine, according to claim 4, wherein the step (b) includes generating the air current flowing along an inner wall surface (1a) of the target room (1).

## Patentansprüche

1. Verfahren zum Zersetzen von Nikotin, wobei das Verfahren einen Schritt (a) der Bestrahlung mit ultraviolettem Licht (L1) in einem Zielraum (1), der das Rauchen erlaubt, umfasst,
**dadurch gekennzeichnet, dass**
ultraviolettes Licht (L1) mit einer Hauptwellenlänge von 200 nm bis 230 nm ausgestrahlt wird, um das Nikotin zu zersetzen.

2. Verfahren zum Zersetzen von Nikotin nach Anspruch 1, wobei der Schritt (a) die Bestrahlung mit ultraviolettem Licht (L1) aus einer Excimer-Lampe (10) umfasst, die mit einem lichtemittierenden Gas verschlossen ist, das Kr und Cl enthält.

3. Verfahren zum Zersetzen von Nikotin nach Anspruch 1 oder 2, wobei der Schritt (a) einen Schritt des Ausstrahlens des ultravioletten Lichts (L1) auf eine Innenwandfläche (1a) des Zielraums (1) oder eine Oberfläche eines in dem Zielraum installierten Objekts umfasst.

4. Verfahren zum Zersetzen von Nikotin nach einem der Ansprüche 1 bis 3, wobei das Verfahren weiter einen Schritt (b) des Erzeugens eines Luftstroms umfasst, um eine Atmosphäre (G1) in dem Zielraum (1) nach außerhalb des Zielraums abzuführen,
wobei der Schritt (b) das Abführen der Atmosphäre (G1), die ein durch den Schritt (a) erzeugtes Nikotinzersetzungsprodukt enthält, nach außerhalb des Zielraums (1) umfasst.

5. Verfahren zum Zersetzen von Nikotin nach Anspruch 4, wobei der Schritt (b) das Erzeugen des Luftstroms umfasst, der entlang einer Innenwandfläche (1a) des Zielraums (1) fließt.

## Revendications

1. Procédé de décomposition de nicotine, le procédé comprenant une étape (a) d'irradiation de lumière ultraviolette (L1) dans une pièce cible (1) où la consommation de tabac est autorisée, **caractérisé en ce que**
une lumière ultraviolette (L1) ayant une longueur d'onde maximale principale de 200 nm à 230 nm est irradiée pour décomposer la nicotine.

2. Procédé de décomposition de nicotine selon la revendication 1, dans lequel l'étape (a) comporte l'irradiation de la lumière ultraviolette (L1) à partir d'une lampe excimère (10) enfermée avec un gaz électroluminescent contenant du Kr et du Cl.

3. Procédé de décomposition de nicotine selon la revendication 1 ou 2, dans lequel l'étape (a) comporte une étape d'irradiation de la lumière ultraviolette (L1) vers une surface de mur interne (1a) de la pièce cible (1) ou une surface d'un objet installé dans la pièce cible.

4. Procédé de décomposition de nicotine selon l'une quelconque des revendications 1 à 3, le procédé comprenant en outre une étape (b) de génération d'un courant d'air pour évacuer une atmosphère (G1) de la pièce cible (1) à l'extérieur de la pièce cible,
dans lequel l'étape (b) comporte l'évacuation de l'atmosphère (G1) contenant un produit de décomposition de la nicotine généré par l'étape (a) à l'extérieur de la pièce cible (1).

5. Procédé de décomposition de nicotine selon la revendication 4, dans lequel l'étape (b) comporte la génération du courant d'air circulant le long d'une surface de mur interne (1a) de la pièce cible (1).
